# EUROPEAN PATENT APPLICATION

(11) **EP 4 439 338 A1**
(43) Date of publication of application: **02.10.2024**
(21) Application number: 23199136.5
(22) Date of filing: 22.09.2023
(51) Int. Cl.: G06F 16/903, G06F 16/906

(54) **METHOD AND SYSTEM FOR GENERATING TABULAR SYNTHETIC DATA**

(30) Priority: 29.03.2023 IN 202321022934
(71) Applicant: Tata Consultancy Services Limited, Maharashtra (IN)
(72) Inventor: PAUL, Bivek Benoy, 682042 Kochi, Kerala (IN); BANSAL, Krishna Kumar, 110001 New Delhi, Delhi (IN); PURUSHOTHAMAN, Anirudh Thenguvila, 682042 Kochi, Kerala (IN); KASIVISWANATHAN, Selva Sarmila, 682042 Kochi, Kerala (IN); BALAJI, Ramesh, 600113 Chennai, Tamil Nadu (IN); VENKATACHARI, Srinivasa Raghavan, 600113 Chennai, Tamil Nadu (IN)
(74) Representative: Goddar, Heinz J.

(57) **Abstract**

State of the art techniques rely on Neural Network based approaches for tabular synthetic data generation are computationally intensive require data preprocessing. A method and system for generating tabular synthetic data falling within data distribution of base data is disclosed that utilizes statistical and unsupervised techniques directly on the raw base data providing computationally less intensive solution without need for data preprocessing. Constrained perturbation is applied on multi-dimensional tabular base data and dimensionality reduction is applied on both the base data and the perturbed data to generate 2D data. The 2D base data is used to train GMMs to obtain optimum number of clusters, using first local maxima of Silhouette score technique. Using median cluster distance approach between the 2D perturbed data and cluster centers of the 2D base data, the outlier in the perturbed data are discarded to obtain final synthetic data samples lying within the base data distribution.

## Description

### CROSS-REFERENCE TO RELATED APPLICATIONS AND PRIORITY

The present application claims priority to Indian application, Application No. 202321022934, filed in India on March 29, 2023.

### TECHNICAL FIELD

The embodiments herein generally relate to the field of data science generation, and, more particularly, to a method and system for generating tabular synthetic data falling within data distribution of base data.

### BACKGROUND

Large volume of data is required to build intelligent systems to enable Artificial Intelligence (AI), or Machine Learning (ML) models learn the patterns present in the training data to predict outputs. There exists scarcity of real word data in certain domains for training ML models, while in other scenarios using the real world data may involve risks of data leakage leading to issues such as breaching data privacy etc. For many such and similar data science challenges, synthetic data generation serves a good solution. However, as well understood, for accurate functioning of intelligent systems, it is critical that the synthetic data closely resembles the real world data in all aspects.

Synthetic data generation has its own challenges, and attempts have been made to address them. Moreover, generation of tabular synthetic data has additional challenges since tabular data usually contains a mix of discrete (categorical) and continuous columns. For example, building prediction models for bank loan approvals, utilizes tabular data comprising categorical data such as gender, income group, and continuous values such as income, age and so on.

Few existing methods propose tabular synthetic data generation approaches. However, they use Neural Network based techniques such as Conditional generative adversarial network (GAN) and the like that are trained on base data to generate synthetic data. Firstly, data preprocessing required for the existing GAN based approaches. Secondly the NN based approaches, as well understood, are computationally intensive. Thirdly, the synthetic data so generated does not fall in feature space of the base data and explicitly requires process of converting the synthetic data to the base data feature space. Furthermore, the existing methods do not propose any metric to check on how good is the new generated data with respect to base data distribution.

Thus, the above technical limitations of the state of the art techniques for tabular synthetic data generation remain unaddressed..

### SUMMARY

Embodiments of the present disclosure present technological improvements as solutions to one or more of the above-mentioned technical problems recognized by the inventors in conventional systems.

For example, in one embodiment, a method for generating tabular synthetic data is provided. The method includes generating a multi-dimensional perturbed data by applying constrained perturbations on a multi-dimensional tabular base data comprising a plurality of categorical features and a plurality of continuous features. The constrained perturbations generate the multi-dimensional perturbed data in vicinity of a distribution of the multi-dimensional tabular base data. Further, the method includes applying a non-linear dimensionality reduction technique on the multi-dimensional perturbed data and the multi-dimensional base data to generate a dimensionality reduced perturbed data and a dimensionality reduced base data. Further, the method includes training a plurality of Gaussian Mixture Models (GMMs) on the dimensionality reduced base data using a first local maxima of Silhouette score technique to identify a plurality of main clusters of the dimensionality reduced base data. The plurality of main clusters capture the distribution of the dimensionality reduced base data and are identified as an optimal number of clusters. Furthermore, the method includes selecting a subset of the perturbed data samples from the dimensionality reduced perturbed data that lie within a median cluster distance from a cluster center of a closest cluster among the optimal number of clusters. Further, the method includes generating a tabular synthetic data having the distribution within the distribution of the multi-dimensional base data by selecting the multi-dimensional perturbed data, associated with the dimensionality reduced perturbed data, which lies within the median cluster distance.

In another aspect, a system for generating tabular synthetic data is provided. The system comprises a memory storing instructions; one or more Input/Output (I/O) interfaces; and one or more hardware processors coupled to the memory via the one or more I/O interfaces, wherein the one or more hardware processors are configured by the instructions to generate a multi-dimensional perturbed data by applying constrained perturbations on a multi-dimensional tabular base data comprising a plurality of categorical features and a plurality of continuous features. The constrained perturbations generate the multi-dimensional perturbed data in vicinity of a distribution of the multi-dimensional tabular base data. Further, the system applies a non-linear dimensionality reduction technique on the multi-dimensional perturbed data and the multi-dimensional base data to generate a dimensionality reduced perturbed data and a dimensionality reduced base data. Further, the system trains a plurality of Gaussian Mixture Models (GMMs) on the dimensionality reduced base data using a first local maxima of a Silhouette score technique to identify a plurality of main clusters of the dimensionality reduced base data. The plurality of main clusters capture the distribution of the dimensionality reduced base data and are identified as an optimal number of clusters. Furthermore, the system selects a subset of the perturbed data samples from the dimensionality reduced perturbed data that lie within a median cluster distance from a cluster center of a closest cluster among the optimal number of clusters. Further, the system generates a tabular synthetic data having the distribution within the distribution of the multi-dimensional base data by selecting the multi-dimensional perturbed data, associated with the dimensionality reduced perturbed data, which lies within the median cluster distance.

In yet another aspect, there are provided one or more non-transitory machine-readable information storage mediums comprising one or more instructions, which when executed by one or more hardware processors causes a method for generating tabular synthetic data.

The method includes generating a multi-dimensional perturbed data by applying constrained perturbations on a multi-dimensional tabular base data comprising a plurality of categorical features and a plurality of continuous features. The constrained perturbations generate the multi-dimensional perturbed data in vicinity of a distribution of the multi-dimensional tabular base data. Further, the method includes applying a non-linear dimensionality reduction technique on the multi-dimensional perturbed data and the multi-dimensional base data to generate a dimensionality reduced perturbed data and a dimensionality reduced base data. Further, the method includes training a plurality of Gaussian Mixture Models (GMMs) on the dimensionality reduced base data using a first local maxima of a Silhouette score technique to identify a plurality of main clusters of the dimensionality reduced base data. The plurality of main clusters capture the distribution of the dimensionality reduced base data and are identified as an optimal number of clusters. Furthermore, the method includes selecting a subset of the perturbed data samples from the dimensionality reduced perturbed data that lie within a median cluster distance from a cluster center of a closest cluster among the optimal number of clusters. Further, the method includes generating a tabular synthetic data having the distribution within the distribution of the multi-dimensional base data by selecting the multi-dimensional perturbed data, associated with the dimensionality reduced perturbed data, which lies within the median cluster distance.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1A is a functional block diagram of a system, for generating tabular synthetic data falling within data distribution of base data, in accordance with some embodiments of the present disclosure.
FIG. 1B illustrates an high level process overview of the system of FIG. 1A, in accordance with some embodiments of the present disclosure.
FIG. 2 is a flow diagram illustrating a method for generating tabular synthetic data falling within the data distribution of the base data, using the system depicted in FIG. 1A and 1B, in accordance with some embodiments of the present disclosure.
FIGS. 3A through 3C (collectively referred as FIG. 3) are two dimensional graphical representation of generation of the tabular synthetic data using base data distribution by the system of FIG. 1, in accordance with some embodiments of the present disclosure.
FIGS. 4A and 4B depict synthetic data generated by the system of FIG. 1A and 1B based on Boston housing dataset and wine dataset respectively as base data, in accordance with some embodiments of the present disclosure.

It should be appreciated by those skilled in the art that any block diagrams herein represent conceptual views of illustrative systems and devices embodying the principles of the present subject matter. Similarly, it will be appreciated that any flow charts, flow diagrams, and the like represent various processes which may be substantially represented in computer readable medium and so executed by a computer or processor, whether or not such computer or processor is explicitly shown.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Embodiments of the present disclosure provide a method and system for generating tabular synthetic data falling within data distribution of base data. The method first generate perturbed data by applying constrained perturbation on a multi-dimensional tabular base data. Further, dimensionality reduction is applied on both the base data and the perturbed data using a t- distributed Stochastic Neighbor Embedding (t-SNE) technique to generate two dimensional (2D) data. The 2D base data is used to train Gaussian Mixture Models (GMMs), to obtain optimum number of clusters within the 2D base data, using a first local maxima of a Silhouette score technique. Furthermore, using a median cluster distance approach between the 2D perturbed data and cluster centers of the 2D base data, the outlier in the perturbed data are identified, and a subset of the 2D perturbed data samples lying within the median cluster distance are selected to be final synthetic data samples lying within the base data distribution.

Unlike the state of the art Neural Network based approaches for tabular synthetic data generation that require data preprocessing and are computationally intensive, the method disclosed utilizes statistical and unsupervised techniques directly on the raw base data providing computationally less intensive solution without need for data preprocessing. Further, the method disclosed generates the synthetic data by perturbing base data, thus the feature space of the synthetic data remains same. The median cluster distance technique provides a metric to ensure that the generated synthetic data is within the cluster of the base data, thus effectively lies within the distribution of base data.

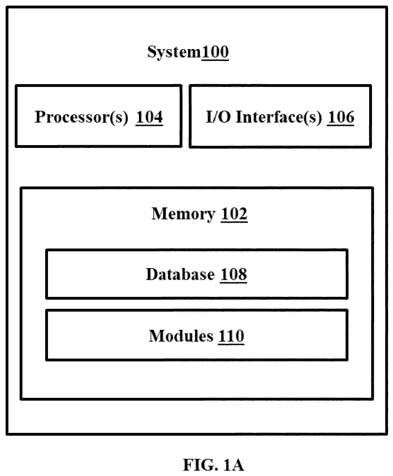

Referring now to the drawings, and more particularly to FIGS. 1A through 4B, where similar reference characters denote corresponding features consistently throughout the figures, there are shown preferred embodiments and these embodiments are described in the context of the following exemplary system and/or method.

FIG. 1A is a functional block diagram of a system 100, for generating tabular synthetic data falling within data distribution of base data, in accordance with some embodiments of the present disclosure. In an embodiment, the system 100 includes a processor(s) 104, communication interface device(s), alternatively referred as input/output (I/O) interface(s) 106, and one or more data storage devices or a memory 102 operatively coupled to the processor(s) 104. The system 100 with one or more hardware processors is configured to execute functions of one or more functional blocks of the system 100.

Referring to the components of system 100, in an embodiment, the processor(s) 104, can be one or more hardware processors 104. In an embodiment, the one or more hardware processors 104 can be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In an embodiment, the system 100 can be implemented in a variety of computing systems including laptop computers, notebooks, hand-held devices such as mobile phones, workstations, mainframe computers, servers, and the like.

The I/O interface(s) 106 can include a variety of software and hardware interfaces, for example, a web interface, a graphical user interface and the like and can facilitate multiple communications within a wide variety of networks N/W and protocol types, including wired networks, for example, LAN, cable, etc., and wireless networks, such as WLAN, cellular and the like. In an embodiment, the I/O interface (s) 106 can include one or more ports for connecting to a number of external devices or to another server or devices.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes.

In an embodiment, the memory 102 includes a plurality of modules 110 such a perturbation module (not shown), the GMMs (not shown), a module implementing the Silhouette score technique (not shown) and the like. The plurality of modules 110 further include programs or coded instructions that supplement applications or functions performed by the system 100 for executing different steps involved in the process of tabular synthetic data generation being performed by the system 100. The plurality of modules 110, amongst other things, can include routines, programs, objects, components, and data structures, which performs particular tasks or implement particular abstract data types. The plurality of modules 110 may also be used as, signal processor(s), node machine(s), logic circuitries, and/or any other device or component that manipulates signals based on operational instructions. Further, the plurality of modules 110 can be used by hardware, by computer-readable instructions executed by the one or more hardware processors 104, or by a combination thereof. The plurality of modules 110 can include various sub-modules (not shown).

Further, the memory 102 may comprise information pertaining to input(s)/output(s) of each step performed by the processor(s) 104 of the system 100 and methods of the present disclosure. Further, the memory 102 includes a database 108. The database (or repository) 108 may include a plurality of abstracted piece of code for refinement and data that is processed, received, or generated as a result of the execution of the plurality of modules in the module(s) 110. Although the data base 108 is shown internal to the system 100, it will be noted that, in alternate embodiments, the database 108 can also be implemented external to the system 100, and communicatively coupled to the system 100. The data contained within such external database may be periodically updated. For example, new data may be added into the database (not shown in FIG. 1A) and/or existing data may be modified and/or non-useful data may be deleted from the database. In one example, the data may be stored in an external system, such as a Lightweight Directory Access Protocol (LDAP) directory and a Relational Database Management System (RDBMS).

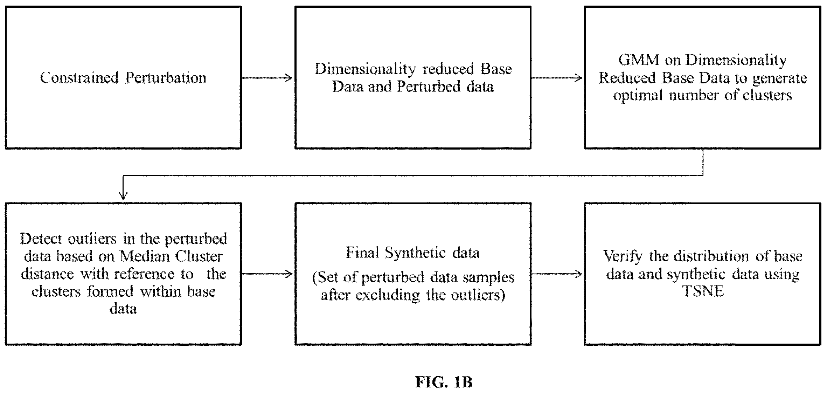

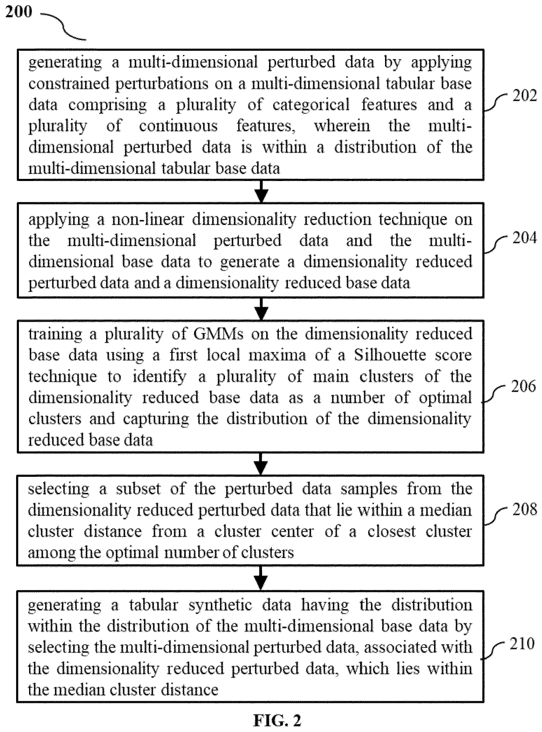

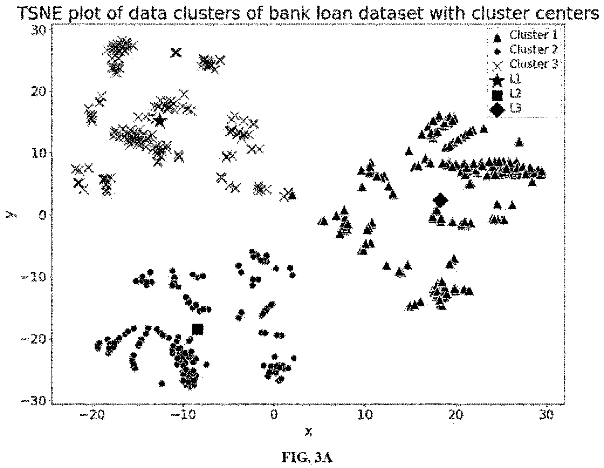

FIG. 1B illustrates an high level process overview of the system of FIG. 1A, in accordance with some embodiments of the present disclosure and functions of the components of the system 100 1A and 1B are now explained with reference to steps in flow diagrams in FIG. 2 and graphical representations and system output on various datasets depicted in FIGS. 3A though 4B, respectively.

FIG. 2 is a flow diagram illustrating a method 200 for generating tabular synthetic data falling within the data distribution of the base data, using the system depicted in FIG. 1A and 1B, in accordance with some embodiments of the present disclosure.

In an embodiment, the system 100 comprises one or more data storage devices or the memory 102 operatively coupled to the processor(s) 104 and is configured to store instructions for execution of steps of the method 200 by the processor(s) or one or more hardware processors 104. The steps of the method 200 of the present disclosure will now be explained with reference to the components or blocks of the system 100 as depicted in FIG. 1A and 1B and the steps of flow diagram as depicted in FIG. 2. Although process steps, method steps, techniques or the like may be described in a sequential order, such processes, methods, and techniques may be configured to work in alternate orders. In other words, any sequence or order of steps that may be described does not necessarily indicate a requirement that the steps to be performed in that order. The steps of processes described herein may be performed in any order practical. Further, some steps may be performed simultaneously.

Referring to the steps of the method 200, at step 202 of the method 200, the perturbation module executed by the one or more hardware processors 104 generates a multi-dimensional perturbed data by applying constrained perturbations on a multi-dimensional tabular base data comprising a plurality of categorical features and a plurality of continuous features. The constrained perturbations generate the multi-dimensional perturbed data in vicinity of a distribution of the multi-dimensional tabular base data. The constrained perturbation perturbs categorical and continuous features differently The constrained perturbations applied on the plurality of continuous features are based on a Coefficient of Variation (CV) score for each feature obtained from distribution of a percentage of sample data selected from among the multi-dimensional tabular base data. Similarly, the constrained perturbations applied on the plurality of categorical features are obtained by random sampling from set of feature values of a sample data such that it covers 90% of the percentage of sample data selected from among the multi-dimensional tabular base data. This prevents undue representation of one 'off' feature values of categorical base data features, in the final synthetic data. The constrained perturbation is performed using automatically calculated perturbation bounds for each feature. Thus, the method utilizes custom perturbation bounds calculated for each feature as opposed to using the same bounds for each feature that existing methods known in the art might implement.

Given the base dataset containing 'n' features and the label, the constrained perturbation creates 20 synthetic data for each instance in base data, wherein the features of the perturbed data fall within the feature space of that particular feature. A percentage of sample data is taken from the given dataset and for continuous features in this sample data, the perturbation is made based on the coefficient of variance for that particular feature in the sample data. The coefficient of variance thus calculated is divided by the number of instances in the sample data, which is subsequently divided by the constant, 4. This value is used as percentage bounds for perturbation for that particular feature. Thus, the perturbation bounds for each continuous feature is calculated automatically. Moreover, and error term of 10⁻⁶ is incorporated into the calculation of continuous feature bounds by the method 200 based on observation after extensive testing that there is a chance for the coefficient of variance for some continuous features in the base data to have the value of 0. This is a rare condition and the incorporation of the error term in continuous feature perturbation bounds calculation, ensures that such edge cases are handled. The categorical feature is generated for the synthetic data by randomly selecting values from a set values of the categorical columns such that the set of categorical values covers more than 90 of the sample data. The 90 coverage condition for the categorical feature perturbation ensures that one off outliers are having undue representation in the perturbed data.

The constrained perturbation approach used herein is in accordance with Applicant's Indian Patent Application No 202321014240, titled LOCAL EXPLANATION OF BLACK BOX MODEL BASED ON CONSTRAINED PERTURBATION AND ENSEMBLE-BASED SURROGATE MODEL, filed on 2 March 2023. Thus, it can be understood that explanation of constrained perturbation is herein discussed briefly and can be referred to above application for further details.

Once perturbed data is obtained, at step 204 of the method 200, the one or more hardware processors 104 apply a non-linear dimensionality reduction technique on the multi-dimensional perturbed data and the multi-dimensional base data to generate a dimensionality reduced perturbed data and a dimensionality reduced base data. The non-linear dimensionality reduction technique is t-distributed stochastic neighbor embedding (t-SNE) that addresses challenges in non-linear data. The dimensionality reduction enables data representation into lower dimensions, for example two dimensional (2D) space, enabling better visualization and further reduces data dimensionality for processing using the GMMs. For example, the base data, containing 612 samples, is normalized using a Standard Scaler, and normalized data is obtained. The normalized data is given as input to the t-SNE technique for non-linear dimensionality reduction to obtain 2D base data. Similar process is applied on the perturbed data to generate 2D perturbed data.

Table 1 below shows a sample multi-dimensional perturbed data set while Table 2 depicts the conversion of Table 1 data into a 2D space. Similarly, Table 3 shows dimensionality reduction of a sample base data.

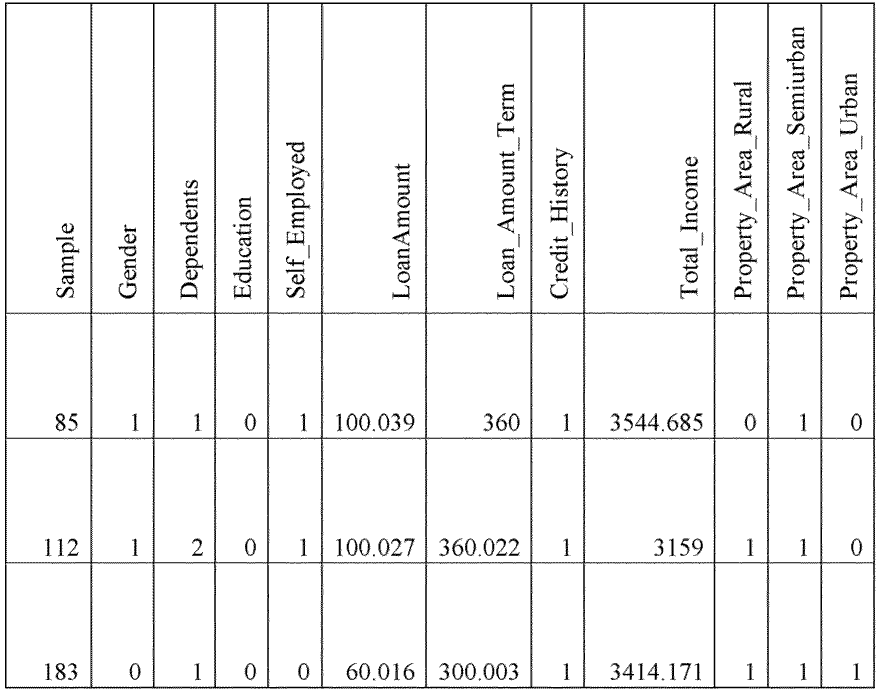

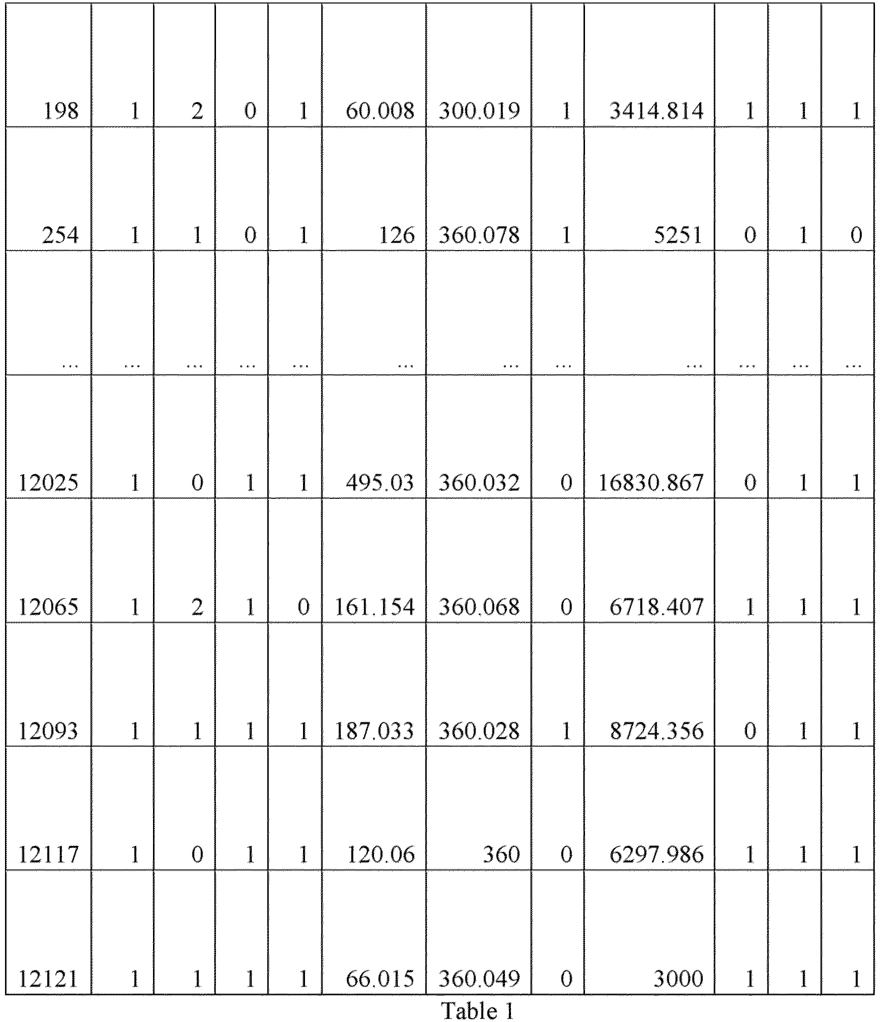

**Table 2**

| Sample | x | y |
|---|---|---|
| 0 | 34.27692 | -45.852631 |
| 1 | -17.229305 | -54.589138 |
| 2 | -29.212889 | 49.204764 |
| 3 | 45.538841 | -8.88176 |
| 4 | -9.725281 | 40.799923 |
| ... | ... | ... |
| 12275 | -41.355644 | 39.787106 |
| 12276 | 27.358761 | 20.618427 |
| 12277 | -51.31485 | 16.567068 |
| 12278 | -1.158718 | -56.527359 |
| 12279 | -45.469307 | -31.583015 |

**Table 3**

| Sample | x | y |
|---|---|---|
| 0 | -9.620996 | -22.992138 |
| 1 | -13.460167 | 15.765047 |
| 2 | -0.823373 | -7.500969 |
| 3 | -7.853862 | -15.350044 |
| 4 | -9.966985 | -22.242212 |

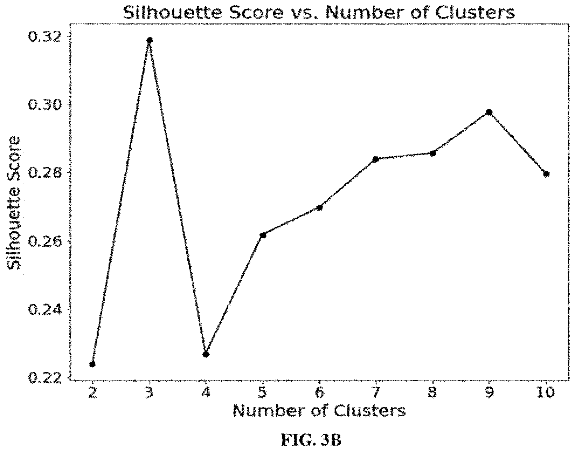

At step 206 of the method 200, the one or more hardware processors 104 train a plurality of Gaussian Mixture Models (GMMs) on the dimensionality reduced base data using a first local maxima of a Silhouette score technique to identify a plurality of main clusters of the dimensionality reduced base data. The plurality of main clusters so obtained capture the distribution of the dimensionality reduced base data and are identified as an optimal number of clusters. The 2-D base data when given as input to GMMs provide the optimum number of clusters for a bank loan data set, as depicted in FIG. 3A. The optimum number of clusters are obtained using the Silhouette score using first local maxima method as depicted in FIG. 3B. The local maxima of the Silhouette score provides the number of clusters of the GMM (with k clusters) for which the Silhouette score is greater than its successor GMM (with k+1 clusters). The first local maxima enables obtaining the main clusters of the base data distribution and prevents going into the sub clusters of the main clusters which is not useful for synthetic data generation. The distribution of base data into 3 clusters are visualized in FIG. 3A. The method 200 utilizes GMM based clustering as the GMM uses probability distribution-based model instead of a distance-based model for clustering, which provides more accuracy especially on points which lie closer to cluster boundaries. However, any clustering technique capable of addressing the clustering requirements to provide optimal clusters can be used, still being within the scope of the method disclosed.

At step 208 of the method 200, the one or more hardware processors 104 select a subset of perturbed data samples from among the dimensionality reduced perturbed data that lie within a median cluster distance from a cluster center of a closest cluster among the optimal number of clusters. For example, Euclidean distance is used as the median cluster distance between the cluster centers of each clusters and all the members of each cluster is calculated. Thus, for 3 clusters of the bank loan dataset of FIG. 3A, three median cluster distances, one for each cluster, are computed.

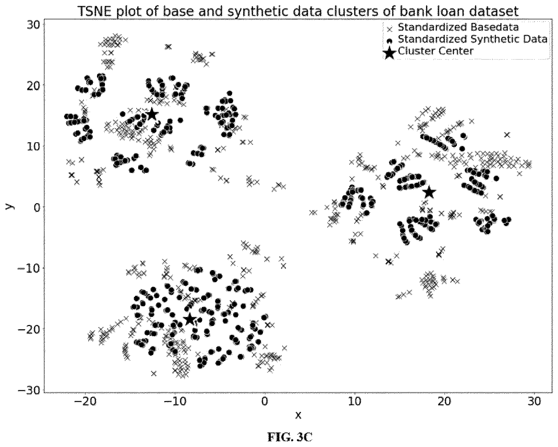

The median distances are named L1, L2 and L3 from the cluster centers depicted using 'star', square' and 'diamond' symbols in FIG. 3A. The 2-dimensional perturbed data is iterated through, and only those data points that fall within the median cluster distance of any one of the 3 clusters are retained while the rest are excluded as outliers. The final selected 2D synthetic data (represented by `dots') after discarding the outliers in the perturbed data (falling outside the median clusters distance of each of the three clusters of base data represented by '×' ) is shown in FIG. 3C. The cluster centers of base data are represented with as 'star' symbol.
At step 210 of the method 200, the one or more hardware processors 104 generate tabular synthetic data having the distribution within the distribution of the multi-dimensional base data by selecting the multi-dimensional perturbed data, associated with the dimensionality reduced perturbed data, which lies within the median cluster distance.

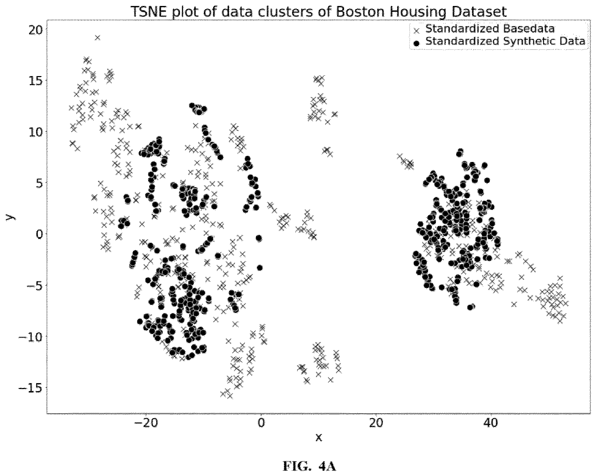

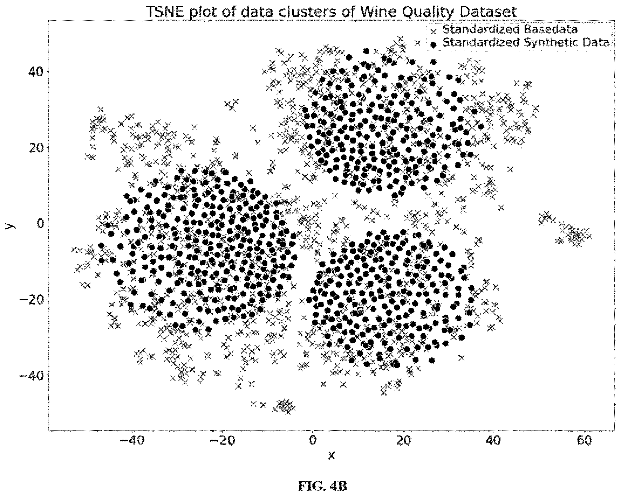

FIGS. 4A and 4B depict synthetic data generated by the system of FIG. 1A and 1B based on Boston housing dataset and wine dataset respectively as base data, in accordance with some embodiments of the present disclosure. The publicly available Boston dataset is tabular regression dataset. The dataset contains features of house like age of house, rooms in house, location of house etc. Based on these features of house, it has a median house value. ZN (proportion of residential land zoned for lots over 25,000 square feet), CHAS (Charles river dummy variable (= 1 it tract bounds river, 0 otherwise) and RAD (Index of accessibility to radial highways) are categorical features of data set and remaining are continuous variable. The wine quality dataset is a tabular classifier dataset. The wine quality dataset contains features like fixed acidity, citric acid, residual sugar, chlorides, total sulfur dioxide, density, pH, etc. Based on these features each instance is classified into 11 different wine quality classes. The visual representation of both datasets depicted in FIGS. 4A and 4B indicate that the generated synthetic data samples (dots) fall within the distribution of base data samples (×). Thus, it can be concluded that the synthetic data generated by the method 200 works equally good for the tabular regression datasets and the tabular classifier datasets.

The tabular synthetic data so generated is further processed to generate labelled training data for building Machine Learning (ML) models The synthetic data generated has applications in ML model building in various domains handling sensitive data such as Finance, Health, and other tabular datasets. The synthetic data generated, which closely resembles the real world data, reduces the need for using real data and helps concealing the sensitive information.

### Utility and advantages of the synthetic data generated by the method disclose herein:

Prevent Adversarial Attacks: The synthetic data generated is private data which conceals the personally identifiable information available in the original dataset. A model trained on the private data, thus will not leak private information when under privacy attacks, from malicious actors, like membership inference attacks.

Data Augmentation: The method disclosed herein can also be used to create additional training data that can be used for data augmentation while training Machine Learning models. Thus, by increasing the number of data points, with the generated synthetic data can introduce more variety in the training dataset, and model also learns more effectively.

Closer Similarity to Base Data: The synthetic data that is generated using the method disclosed herein lies within the distribution of the original dataset. Thus, a model trained on the synthetic data perform well. This property of the generated synthetic data can also be extrapolated to aid in some explainability objectives.

Domain Agnostic: The synthetic data that is generated using the method disclosed herein has been tested in variety of datasets including a bank loan dataset belonging to the finance domain. The synthetic data generation approach using the method disclosed herein is domain agnostic. Thus, real world tabular data from any domain and generated synthetic data that conceals the private information while still falling within the original data distribution. Thus, state of the art techniques use Neural Network based approaches for tabular synthetic data generation, which have technical limitation such as data preprocessing with computationally intensive processing. The method and system disclosed herein generates tabular synthetic data that falls within data distribution of base data by utilizing statistical and unsupervised techniques directly on the raw base data providing computationally less intensive solution without need for data preprocessing. Constrained perturbation is applied on multi-dimensional tabular base data and dimensionality reduction is applied on both the base data and the perturbed data to generate 2D data. The 2D base data is used to train GMMs to obtain optimum number of clusters, using first local maxima of Silhouette score technique. Using median cluster distance approach between the 2D perturbed data and cluster centers of the 2D base data, the outlier in the perturbed data are discarded to obtain final synthetic data samples lying within the base data distribution.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor implemented method (200) for synthetic data generation, the method comprising:
generating (202), via one or more hardware processors, a multi-dimensional perturbed data by applying constrained perturbations on a multi-dimensional tabular base data comprising a plurality of categorical features and a plurality of continuous features, wherein the constrained perturbations generate the multi-dimensional perturbed data in vicinity of a distribution of the multi-dimensional tabular base data;
applying (204), via the one or more hardware processors, a non-linear dimensionality reduction technique on the multi-dimensional perturbed data and the multi-dimensional base data to generate a dimensionality reduced perturbed data and a dimensionality reduced base data;
training (206), via the one or more hardware processors, a plurality of Gaussian Mixture Models (GMMs) on the dimensionality reduced base data using a first local maxima of a Silhouette score technique to identify a plurality of main clusters of the dimensionality reduced base data, wherein the plurality of main clusters capture the distribution of the dimensionality reduced base data and are identified as an optimal number of clusters;
selecting (208), via the one or more hardware processors, a subset of perturbed data samples from among the dimensionality reduced perturbed data that lie within a median cluster distance from a cluster center of a closest cluster among the optimal number of clusters; and
generating (210), via the one or more hardware processors, tabular synthetic data having the distribution within the distribution of the multi-dimensional base data by selecting the multi-dimensional perturbed data, associated with the dimensionality reduced perturbed data lying within the median cluster distance.

2. The method as claimed in claim 1, wherein the tabular synthetic data is processed to generate labelled training data for building Machine Learning (ML) models.

3. The method as claimed in claim 1,
wherein the constrained perturbations applied on the plurality of continuous features are based on a Coefficient of Variation (CV) score for each feature obtained from distribution of a percentage of sample data selected from among the multi-dimensional tabular base data, and
wherein the constrained perturbations applied on the plurality of categorical features are obtained by random sampling from set of feature values of a sample data such that it covers 90% of the percentage of sample data selected from among the multi-dimensional tabular base data.

4. The method as claimed in claim 1, wherein the non-linear dimensionality reduction technique is t-distributed stochastic neighbor embedding (t-SNE).

5. A system (100) for synthetic data generation, the system (100) comprising:
a memory (102) storing instructions;
one or more Input/Output (I/O) interfaces (106); and
one or more hardware processors (104) coupled to the memory (102) via the one or more I/O interfaces (106), wherein the one or more hardware processors (104) are configured by the instructions to:
generate a multi-dimensional perturbed data by applying constrained perturbations on a multi-dimensional tabular base data comprising a plurality of categorical features and a plurality of continuous features, wherein the constrained perturbations generate the multi-dimensional perturbed data in vicinity of a distribution of the multi-dimensional tabular base data;
apply a non-linear dimensionality reduction technique on the multi-dimensional perturbed data and the multi-dimensional base data to generate a dimensionality reduced perturbed data and a dimensionality reduced base data;
train a plurality of Gaussian Mixture Models (GMMs) on the dimensionality reduced base data using a first local maxima of a Silhouette score technique to identify a plurality of main clusters of the dimensionality reduced base data, wherein the plurality of main clusters capture the distribution of the dimensionality reduced base data and are identified as an optimal number of clusters;
select a subset of perturbed data samples from among the dimensionality reduced perturbed data that lie within a median cluster distance from a cluster center of a closest cluster among the optimal number of clusters; and
generate tabular synthetic data having the distribution within the distribution of the multi-dimensional base data by selecting the multi-dimensional perturbed data, associated with the dimensionality reduced perturbed data lying within the median cluster distance.

6. The system as claimed in claim 5, wherein the tabular synthetic data is processed to generate labelled training data for building Machine Learning (ML) models.

7. The system as claimed in claim 5,
wherein the constrained perturbations applied on the plurality of continuous features are based on a Coefficient of Variation (CV) score for each feature obtained from distribution of a percentage of sample data selected from among the multi-dimensional tabular base data, and
wherein the constrained perturbations applied on the plurality of categorical features are obtained by random sampling from set of feature values of a sample data such that it covers 90% of the percentage of sample data selected from among the multi-dimensional tabular base data.

8. The system as claimed in claim 5, wherein the non-linear dimensionality reduction technique is t-distributed stochastic neighbor embedding (t-SNE).

9. One or more non-transitory machine-readable information storage mediums comprising one or more instructions which when executed by one or more hardware processors cause:
generating a multi-dimensional perturbed data by applying constrained perturbations on a multi-dimensional tabular base data comprising a plurality of categorical features and a plurality of continuous features, wherein the constrained perturbations generate the multi-dimensional perturbed data in vicinity of a distribution of the multi-dimensional tabular base data;
applying a non-linear dimensionality reduction technique on the multi-dimensional perturbed data and the multi-dimensional base data to generate a dimensionality reduced perturbed data and a dimensionality reduced base data;
training a plurality of Gaussian Mixture Models (GMMs) on the dimensionality reduced base data using a first local maxima of a Silhouette score technique to identify a plurality of main clusters of the dimensionality reduced base data, wherein the plurality of main clusters capture the distribution of the dimensionality reduced base data and are identified as an optimal number of clusters;
selecting a subset of perturbed data samples from among the dimensionality reduced perturbed data that lie within a median cluster distance from a cluster center of a closest cluster among the optimal number of clusters; and
generating tabular synthetic data having the distribution within the distribution of the multi-dimensional base data by selecting the multi-dimensional perturbed data, associated with the dimensionality reduced perturbed data lying within the median cluster distance.

10. The one or more non-transitory machine readable information storage mediums of claim 9, wherein the tabular synthetic data is processed to generate labelled training data for building Machine Learning (ML) models.

11. The one or more non-transitory machine readable information storage mediums of claim 9,
wherein the constrained perturbations applied on the plurality of continuous features are based on a Coefficient of Variation (CV) score for each feature obtained from distribution of a percentage of sample data selected from among the multi-dimensional tabular base data, and
wherein the constrained perturbations applied on the plurality of categorical features are obtained by random sampling from set of feature values of a sample data such that it covers 90% of the percentage of sample data selected from among the multi-dimensional tabular base data.

12. The one or more non-transitory machine readable information storage mediums of claim 9, wherein the non-linear dimensionality reduction technique is t-distributed stochastic neighbor embedding (t-SNE).

## Amended claims

### Amended claims in accordance with Rule 137(2) EPC.

1. A processor implemented method (200) for synthetic data generation, the processor implemented method (200) comprising:
generating (202), via one or more hardware processors (104), a multi-dimensional perturbed data by applying constrained perturbations on a multi-dimensional tabular base data comprising a plurality of categorical features and a plurality of continuous features, wherein the constrained perturbations generate the multi-dimensional perturbed data in vicinity of a distribution of the multi-dimensional tabular base data, wherein the constrained perturbations applied on the plurality of continuous features are based on a Coefficient of Variation, CV, score for each feature obtained from distribution of a percentage of sample data selected from among the multi-dimensional tabular base data, wherein the constrained perturbations applied on the plurality of categorical features are obtained by random sampling from set of feature values of a sample data such that it covers 90% of the percentage of sample data selected from among the multi-dimensional tabular base data, and wherein the constrained perturbation is performed using automatically calculated perturbation bounds for each feature;
applying (204), via the one or more hardware processors (104), a non-linear dimensionality reduction technique on the multi-dimensional perturbed data and the multi-dimensional base data to generate a dimensionality reduced perturbed data and a dimensionality reduced base data;
training (206), via the one or more hardware processors (104), a plurality of Gaussian Mixture Models, GMMs, on the dimensionality reduced base data using a first local maxima of a Silhouette score technique to identify a plurality of main clusters of the dimensionality reduced base data, wherein the plurality of main clusters capture the distribution of the dimensionality reduced base data and are identified as an optimal number of clusters;
selecting (208), via the one or more hardware processors (104), a subset of perturbed data samples from among the dimensionality reduced perturbed data that lie within a median cluster distance from a cluster center of a closest cluster among the optimal number of clusters;
generating (210), via the one or more hardware processors (104), tabular synthetic data having the distribution within the distribution of the multi-dimensional base data by selecting the multi-dimensional perturbed data, associated with the dimensionality reduced perturbed data lying within the median cluster distance; and
processing the tabular synthetic data to generate labelled training data for building Machine Learning, ML, models.

2. The processor implemented method (200) as claimed in claim 1, wherein the non-linear dimensionality reduction technique is t-distributed stochastic neighbor embedding, t-SNE.

3. A system (100) for synthetic data generation, the system (100) comprising:
a memory (102) storing instructions;
one or more Input/Output, I/O, interfaces (106); and
one or more hardware processors (104) coupled to the memory (102) via the one or more I/O interfaces (106), wherein the one or more hardware processors (104) are configured by the instructions to:
generate a multi-dimensional perturbed data by applying constrained perturbations on a multi-dimensional tabular base data comprising a plurality of categorical features and a plurality of continuous features, wherein the constrained perturbations generate the multi-dimensional perturbed data in vicinity of a distribution of the multi-dimensional tabular base data, wherein the constrained perturbations applied on the plurality of continuous features are based on a Coefficient of Variation, CV, score for each feature obtained from distribution of a percentage of sample data selected from among the multi-dimensional tabular base data, wherein the constrained perturbations applied on the plurality of categorical features are obtained by random sampling from set of feature values of a sample data such that it covers 90% of the percentage of sample data selected from among the multi-dimensional tabular base data, and wherein the constrained perturbation is performed using automatically calculated perturbation bounds for each feature;
apply a non-linear dimensionality reduction technique on the multi-dimensional perturbed data and the multi-dimensional base data to generate a dimensionality reduced perturbed data and a dimensionality reduced base data;
train a plurality of Gaussian Mixture Models, GMMs, on the dimensionality reduced base data using a first local maxima of a Silhouette score technique to identify a plurality of main clusters of the dimensionality reduced base data, wherein the plurality of main clusters capture the distribution of the dimensionality reduced base data and are identified as an optimal number of clusters;
select a subset of perturbed data samples from among the dimensionality reduced perturbed data that lie within a median cluster distance from a cluster center of a closest cluster among the optimal number of clusters;
generate tabular synthetic data having the distribution within the distribution of the multi-dimensional base data by selecting the multi-dimensional perturbed data, associated with the dimensionality reduced perturbed data lying within the median cluster distance; and
process the tabular synthetic data to generate labelled training data for building Machine Learning, ML, models.

4. The system (100) as claimed in claim 3, wherein the non-linear dimensionality reduction technique is t-distributed stochastic neighbor embedding, t-SNE.

5. One or more non-transitory machine-readable information storage mediums comprising one or more instructions which when executed by one or more hardware processors (104) cause:
generating a multi-dimensional perturbed data by applying constrained perturbations on a multi-dimensional tabular base data comprising a plurality of categorical features and a plurality of continuous features, wherein the constrained perturbations generate the multi-dimensional perturbed data in vicinity of a distribution of the multi-dimensional tabular base data, wherein the constrained perturbations applied on the plurality of continuous features are based on a Coefficient of Variation, CV, score for each feature obtained from distribution of a percentage of sample data selected from among the multi-dimensional tabular base data, wherein the constrained perturbations applied on the plurality of categorical features are obtained by random sampling from set of feature values of a sample data such that it covers 90% of the percentage of sample data selected from among the multi-dimensional tabular base data, and wherein the constrained perturbation is performed using automatically calculated perturbation bounds for each feature;
applying a non-linear dimensionality reduction technique on the multi-dimensional perturbed data and the multi-dimensional base data to generate a dimensionality reduced perturbed data and a dimensionality reduced base data;
training a plurality of Gaussian Mixture Models, GMMs, on the dimensionality reduced base data using a first local maxima of a Silhouette score technique to identify a plurality of main clusters of the dimensionality reduced base data, wherein the plurality of main clusters capture the distribution of the dimensionality reduced base data and are identified as an optimal number of clusters;
selecting a subset of perturbed data samples from among the dimensionality reduced perturbed data that lie within a median cluster distance from a cluster center of a closest cluster among the optimal number of clusters;
generating tabular synthetic data having the distribution within the distribution of the multi-dimensional base data by selecting the multi-dimensional perturbed data, associated with the dimensionality reduced perturbed data lying within the median cluster distance; and
processing the tabular synthetic data to generate labelled training data for building Machine Learning, ML, models.

6. The one or more non-transitory machine readable information storage mediums of claim 5, wherein the non-linear dimensionality reduction technique is t-distributed stochastic neighbor embedding, t-SNE.
